# EUROPEAN PATENT APPLICATION

(11) **EP 4 844 610 A1**
(43) Date of publication of application: **25.11.2026**
(21) Application number: 25305747.5
(22) Date of filing: 23.05.2025
(51) Int. Cl.: G06F 21/54, G06F 21/55, H04L 9/40

(54) **METHOD AND SERVER FOR PREVENTING AND/OR DETECTING BOT INTERACTION VIA A WEBPAGE**

(71) Applicant: Orange, 92130 Issy-les-Moulineaux (FR)
(72) Inventor: PLESA, Mihail, 020334 Bucharest (RO); DAVID, Simona, 020334 Bucharest (RO); MOCANASU, Ancuta, 020334 Bucharest (RO); CIRJAN, Antoniu Ioan, 020334 Bucharest (RO)
(74) Representative: Plasseraud IP

(57) **Abstract**

The present disclosure relates to a method (20) for generating, by a server, a webpage to be displayed at a terminal, wherein the webpage comprises an interaction component for detecting an input from a user via a user interface of the terminal, comprising:
- (S20) obtaining an interaction image comprising an interaction portion,
- (S21) generating code instructions for the interaction component, which code instructions are configured to return expected interaction data in response to detecting an input via the user interface in an expected interaction zone which corresponds to the interaction portion of the interaction image,
- (S22) generating code instructions for at least one fake component, wherein the code instructions of each fake component are configured to return unexpected interaction data different from the expected interaction data, in response to detecting an input via the user interface in an unexpected interaction zone which does not overlap the expected interaction zone, and
- (S23) generating a webpage comprising the interaction image and the code instructions of the interaction and fake components.

## Description

### Technical field

The present invention relates to the field of Internet browsing and webpage user interaction, and relates more specifically to a method and server for preventing and/or detecting bot interaction via a webpage.

### Background

By "bot" (or "Internet bot"), we mean a software application that performs automated tasks over the Internet, with the intent to imitate human activity. The present disclosure relates more specifically to bots acting as clients and interacting with (web) servers via webpages having interaction components designed to receive inputs from human users.

To date, numerous approaches, such as CAPTCHAs (for "Completely Automated Public Turing test to tell Computers and Humans Apart"), have emerged to protect webpages from bot interaction. A CAPTCHA challenge must be sufficiently complex to prevent bots from solving it, whilst remaining straightforward for legitimate human users.

Confronted with CAPTCHAs, bot attacks have begun to focus not only on solving the challenge itself, but rather on decompiling, analyzing and manipulating the code and data that is used to generate the challenge. This is particularly sensitive with CAPTCHAs, as they use JavaScript interpreted language to run in the web browser of a human user's terminal, making code analysis much simpler for a bot.

It is known from FR 3118229 A1 the implementation of an anti-bot mechanism that deters bots from interacting with buttons on a webpage. The solution proposed by FR 3118229 A1 achieves this by embedding multiple iframe elements, each with multiple buttons, on the webpage. Some buttons, referred to as "fake buttons", have specific combinations of properties that make them invisible to human users and are introduced to mislead bots attempting to interact with the webpage. Only one of the buttons, referred to as "interaction button", is the button that a human user is expected to click on, and has a specific combination of properties that makes it visible by the human user.

A limitation of the solution proposed by FR 3118229 A1 is that a bot can identify the interaction button which should be clicked on by analyzing the webpage's code instructions. Indeed, by analyzing the code instructions of the interaction button and fake buttons, it may be possible, in some cases, to identify which button has a specific combination of properties that makes it visible by a human user, and thereby to identify the interaction button.

### Summary

The present disclosure aims at improving the situation. In particular, the present disclosure aims at addressing at least some of the limitations of the prior art discussed above. In particular, the present disclosure aims at proposing a solution for improving the robustness of webpages against bot attacks which rely essentially on code analysis.

Also, the present disclosure aims at proposing, in some embodiments at least, a solution for improving the robustness of webpages against bot attacks which rely on both code analysis and image analysis.

For that purpose, and according to a first aspect, the present disclosure relates to a method for generating, by a server, a webpage to be displayed at a terminal, wherein the webpage comprises an interaction component for detecting an input from a user via a user interface of the terminal, wherein the method comprises:
- obtaining an interaction image, wherein the interaction image comprises an interaction portion which is detectable by the user,
- generating code instructions for the interaction component, which code instructions are configured to return specific interaction data, referred to as "expected interaction data", in response to detecting an input via the user interface in an expected interaction zone which corresponds to the interaction portion of the interaction image,
- generating code instructions for at least one fake component, wherein the code instructions of each fake component are configured to return specific interaction data, referred to as "unexpected interaction data", which is different from the expected interaction data, in response to detecting an input via the user interface in an unexpected interaction zone in the interaction image which does not overlap the expected interaction zone, and
- generating a webpage comprising the interaction image, the code instructions of the interaction component and the code instructions of each fake component.

Hence, it is proposed to use an interaction component and one or more fake components (e.g. buttons) with which it is possible to interact via the user interface. The interaction and fake components differ by the interactions zones in which they are configured to detect an input via the user interface, and by the interaction data returned in response to detecting such an input. The interaction zones of the interaction and fake components are to be positioned in the webpage in an area occupied by an interaction image. The interaction image is typically composed by a set of pixels, and it comprises a subset of adjacent pixels, referred to as "interaction portion" of the interaction image, which occupy an area of the webpage which matches the interaction zone (referred to as "expected interaction zone") of the interaction component. This interaction portion is detectable by a human user, i.e. a human user looking at the interaction image can distinguish the interaction portion from the rest of the interaction image, such that a human user looking at the interaction image can identify where the interaction zone is. A bot performing only code analysis cannot detect the interaction portion of the interaction image and, since the interaction and fake components can all be interacted with via the user interface, it cannot tell apart the interaction component from the fake component(s). Hence, the presence of such fake components in the webpage decreases the probability that a bot successfully interacts with the interaction component, thereby improving the robustness of the webpage against bot attacks.

In some embodiments, the method for generating a webpage may further comprise one or more of the following optional features, considered either alone or in any technically possible combination.

In some embodiments, the method for generating a webpage comprises generating code instructions for a plurality of fake components, wherein the code instructions of the interaction component and the code instructions of the plurality of fake components are configured such that a property defined by the code instructions cannot have a same value for the plurality of fake components and a different value for the interaction component.

In some embodiments, the code instructions of each fake component are identical to the code instructions of the interaction component except for the unexpected interaction data, which is different from the expected interaction data, and the unexpected interaction zone, which does not overlap the expected interaction zone.

In some embodiments, the method for generating a webpage comprises selecting randomly the position of the interaction portion in the interaction image. In the present disclosure, by "selected randomly", we mean a selection which is based on a random or pseudo-random number generator.

In some embodiments, the expected interaction data of the interaction component and the unexpected interaction data of each fake component are arbitrary data.

In some embodiments, the method for generating a webpage comprises generating code instructions for a plurality of fake components associated with respective unexpected interaction zones, wherein the unexpected interaction zones do not overlap each other.

In some embodiments, the expected interaction data of the interaction component and the unexpected interaction data of each fake component are selected randomly.

In some embodiments, the method for generating a webpage comprises modifying the interaction portion from one webpage generation to another webpage generation.

In some embodiments, the method for generating a webpage comprises modifying the expected interaction zone and each unexpected interaction zone from one webpage generation to another webpage generation.

In some embodiments, the method for generating a webpage comprises modifying the expected interaction data and each unexpected interaction data from one webpage generation to another webpage generation.

In some embodiments, the expected interaction zone and each unexpected interaction zone have identical shapes and dimensions.

In some embodiments, the obtaining of the interaction image comprises obtaining an original image and adding noise to the original image to obtain the interaction image.

In some embodiments, the obtaining of the interaction image comprises obtaining an original image and applying an adversarial machine learning attack technique on the original image to obtain the interaction image.

In some embodiments, the interaction component and each fake component correspond to clickable components.

In some embodiments, the interaction component and each fake component correspond to HTML <button> elements or to clickable HTML <div> elements.

According to second aspect, the present disclosure relates to a method for detecting, by a server, bot interaction with a webpage at a terminal, comprising:
- generating a webpage according to any one of the embodiments of the present disclosure,
- transmitting the webpage to the terminal,
- receiving interaction data from the terminal,
- in response to the received interaction data comprising unexpected interaction data: detecting a possible bot interaction.

According to a third aspect, the present disclosure relates to a computer program product comprising instructions which, when executed by at least one processor, configure said at least one processor to carry out a method according to any one of the embodiments of the present disclosure.

According to a fourth aspect, the present disclosure relates to a non-transitory computer-readable storage medium comprising instructions which, when executed by at least one processor, configure said at least one processor to carry out a method according to any one of the embodiments of the present disclosure.

According to a fifth aspect, the present disclosure relates to a server comprising at least one processor and at least one memory, configured to carry out a method according to any one of the embodiments of the present disclosure.

### Brief description of figures

The invention will be better understood upon reading the following description, given as an example that is in no way limiting, and made in reference to the figures which show:
- Figure 1: a schematic representation of an example of a server,
- Figure 2: a flow chart illustrating an example of a method for generating a webpage,
- Figure 3: schematic representations of examples of interaction images,
- Figure 4: a flow chart illustrating an example of a method for detecting bot interaction with a webpage at a terminal.

In these figures, references identical from one figure to another designate identical or analogous elements. For reasons of clarity, the elements shown are not to scale, unless explicitly stated otherwise.

### Detailed description

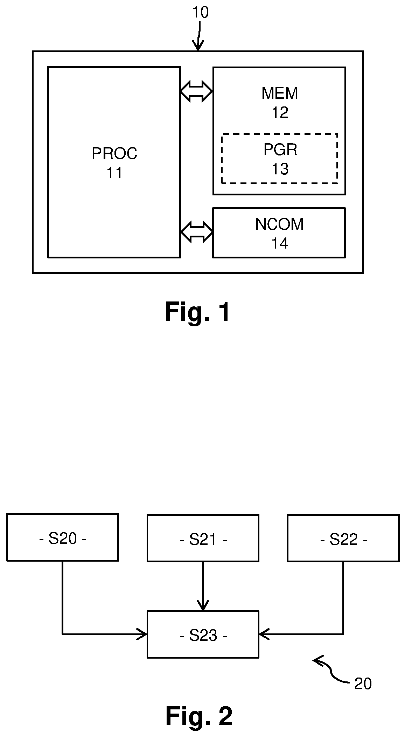

Figure 1 represents schematically an example of a server 10 suitable for implementing a method 20 for generating a webpage.

As illustrated by figure 1, the server 10 comprises one or more processors 11 and one or more memories 12. The one or more processors 11 may include for instance a central processing unit (CPU), a digital signal processor (DSP), a field-programmable gate array (FPGA), an application specific integrated circuit (ASIC), etc. The one or more memories 12 may include any type of computer readable volatile and non-volatile memories (magnetic hard disk, solid-state disk, optical disk, electronic memory, etc.). The one or more memories 12 may store a computer program product 13, in the form of a set of program-code instructions to be executed by the one or more processors 11 to implement all or part of the steps of a method 20 for generating a webpage, according to any one of the embodiments disclosed herein.

As illustrated by figure 1, in some examples, the server 10 may comprise a network communication unit 14, configured to exchange data with remote equipment. The network communication unit 14 may support one or more suitable communication protocols, which may be wired (including optical) and/or wireless.

As indicated above, the present disclosure aims at improving the robustness of webpages against bot attacks which rely essentially on code analysis. In particular, the present disclosure relates to protecting interaction components by which a (human) user may submit an input to be processed by the server 10, by reducing the probability that bots submit inputs via interaction components.

By "interaction component", we mean any type of component of a webpage via which a user may submit inputs to be processed by the server 10.

The interaction component corresponds to the component by which a (human) user is expected to submit inputs. The input is submitted by a (human) user via a user interface (e.g. mouse, tactile screen, etc.) of the terminal.

In the present disclosure, it is proposed to introduce also at least one other component via which inputs may be submitted, referred to as "fake component". A fake component is to be included in the webpage in such a way that it should not be used by a (human) user to submit inputs. Hence, inputs submitted via a fake component are likely to have been submitted by a bot. In other words, at least one fake component is introduced to fool a bot performing code analysis into interacting with a fake component instead of the interaction component.

The present disclosure relates in particular to interaction and fake components which correspond to clickable components. Such components are designed to perform specific actions when clicked/touched/selected, such as submitting a form, triggering a function, etc. Non-limitative examples of clickable components include hypertext markup language (HTML) <button> elements, clickable HTML <div> elements, etc.

Each of the interaction component and fake component(s) is configured to detect an input within a specific interaction zone of the webpage, which will be further discussed hereinbelow. The interaction zone of the interaction component is referred to as "expected interaction zone" 32 since it corresponds to the zone in which a (human) user is expected to submit an input (e.g. by clicking in said interaction zone). In turn, the interaction zone of a fake component is referred to as "unexpected interaction zone" 33 since it corresponds to a zone in which a (human) user is not expected to submit an input.

Figure 2 represents a diagram showing the main steps of a method 20 for generating a webpage, which is implemented by the server 10. The webpage generated by the server 10 is to be displayed at a remote (client) terminal (not represented in the figures), typically by a web browser running on said terminal. Hence, the server 10 generates a webpage which is then transmitted to the terminal. The server 10 may then receive data to be processed, resulting from an interaction with the webpage at the terminal.

As illustrated by figure 2, the robustness enhancing method 20 comprises a step S20 of obtaining an interaction image 30.

The interaction image 30 will be displayed in the webpage in an area that covers the expected interaction zone 32 of the interaction component and the unexpected interaction zone 33 of each fake component. Hence, the same image covers all the interaction zones 32, 33 of the interaction and fake components. Accordingly, the dimensions of the interaction image 30 are greater than the dimensions of each interaction zone 32, 33.

In particular, the dimensions of the interaction image 30 are greater than the dimensions of the expected interaction zone 32 of the interaction component, and the interaction image comprises an interaction portion 31 located where the expected interaction zone 32 of the interaction component is to be located in the webpage. This interaction portion 31 is detectable by a (human) user, i.e. a (human) user looking at the interaction image 30 can distinguish the interaction portion 31 from the rest of the interaction image 30, and can identify that this interaction portion 31 corresponds to where the expected interaction zone 32 is.

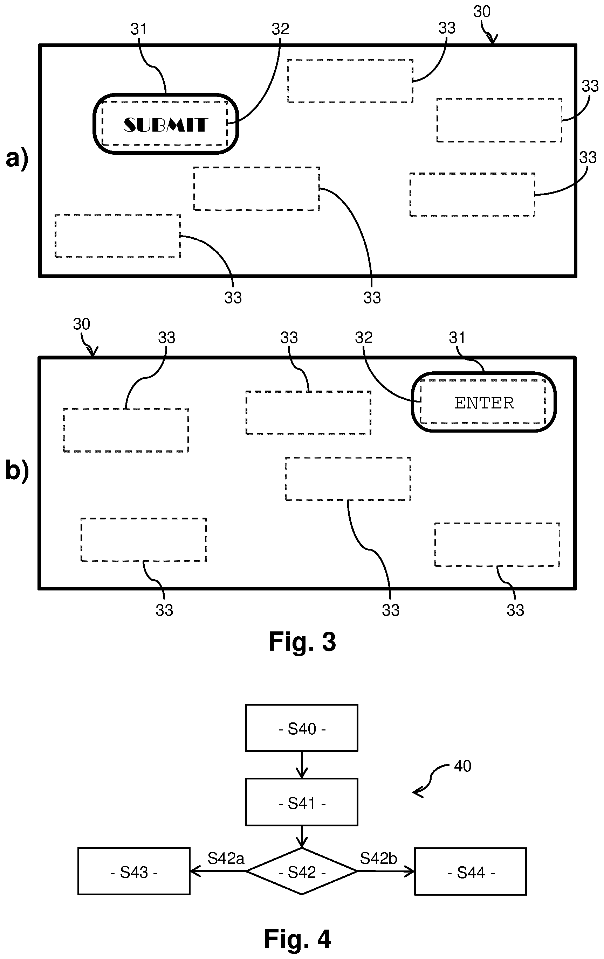

Figure 3 represents schematically different examples of interaction images 30.

For example, part a) of figure 3 represents a first example of interaction image 30 which comprises an interaction portion 31 located towards the top-left corner of the interaction image 30. In this example, the interaction portion 31 corresponds to a representation of a button with the word "Submit", which can be identified by a (human) user as indicating where the expected interaction zone 32 is located.

Part b) of figure 3 represents a second example of interaction image 30 which comprises an interaction portion 31 located towards the top-right corner of the interaction image 30. In this example, the interaction portion 31 corresponds to a representation of a button with the word "Enter", which can also be identified by a (human) user as indicating where the expected interaction zone 32 is located.

Of course, other examples of interaction images 30 having an interaction portion 31 identifiable by a (human) user can be considered, as long as it enables a (human) user to distinguish the interaction portion 31 from the rest of the interaction image 30. Also, any format may be considered for the interaction image 30, and the choice of a specific format (e.g. JPEG, PNG, GIF, etc.) corresponds to a specific but non-limitative embodiment.

During step S20, the server 10 may for example select the interaction image 30 in a specific set of different interaction images 30 having interaction portions 31 at different positions within the interaction images 30. In other words, the position of the interaction portion 31 in a first interaction image 30 of the specific set may be different from the position of the interaction portion 31 in a second interaction image 30 of the specific set. Also, in some examples, the interaction portions 31 may vary in terms of e.g. aspect (e.g. texture, color, font of represented letters if any, etc.) from one interaction image 30 of the specific set to another interaction image 30 of the specific set. Also, in some examples, the background may vary in terms of e.g. aspect from one interaction image 30 of the specific set to another interaction image 30 of the specific set. In the specific set, if two interaction images 30 have interaction portions 31 at the same positions, said two interaction images 30 should differ by at least one other characteristic, e.g. by the aspect of the background and/or by the aspect of the interaction portion 31. For example, step S20 may comprise selecting randomly an interaction image 30 in the specific set of interaction images 30, which results in selecting randomly the position of the interaction portion 31 in the interaction image 30. In other examples, the interaction image 30 may be selected arbitrarily in the specific set of interaction images 30, for example by scanning the interaction images 30 of the specific set according to a predefined arbitrary order. Regardless of how the interaction image 30 is selected, the specific set and/or the selection are/is preferably such that the position of the interaction portion 31 is likely to vary from one iteration of step S20 to the following iteration of step S20 (e.g. when the webpage is refreshed).

According to another example, the server 10 may generate the interaction image 30 during step S20. Generally, the server 10 may generate the interaction image by using any image generation method known to the skilled person, and the choice of a specific image generation method corresponds to a specific but non-limitative embodiment. For example, the server 10 may use a specific set of different background images and a specific set of different button images, wherein the dimensions of the background images are greater than the dimensions of the button images. In such a case the server 10 may for example select a background image (from the specific set of different background images) and a button image (from the specific set of different button images). The server 10 may also select (for example randomly) a position in the selected background image which corresponds to the desired position for the interaction portion 31 (e.g. desired coordinates of the top-left corner of the interaction portion 31). Then, the server 10 may generate the interaction image 30 based on the selected background image by replacing, at the selected position, the pixels of the selected background image by the pixels of the selected button image. Of course, the selected position should be such that all the pixels of the selected button image can be included in the selected background image. It should be noted that the interaction image 30 may also be generated similarly by considering a single background image (instead of a specific set of different background images) and/or by considering a single button image (instead of a specific set of different button images).

It should be noted that the position of the interaction portion 31 within the interaction image 30 may be selected during step S20, or it may be selected during a different step and received as an input by step S20, as long the interaction portion 31 matches the expected interaction zone 32 of the interaction component.

As illustrated by figure 2, the method 20 for generating a webpage comprises a step S21 of generating code instructions for the interaction component and a step S22 of generating code instructions for at least one fake component.

In the following, we consider in a non-limitative manner that N_{FC} > 1 fake components are generated. It is emphasized that the probability that a bot successfully interacts with the interaction component decreases as the number N_{FC} of fake components increases.

The code instructions generated by the server 10 are to be used at the terminal to implement the interaction component and the fake components. These code instructions generated can use any programming language, and the choice of a specific type of programming language corresponds to a specific but non-limitative embodiment. For example, the code instructions correspond to HTML and/or JavaScript code instructions.

The generation of the code instructions may use any method known to the skilled person, and the choice of a specific method corresponds to a specific but non-limitative embodiment of the present disclosure. In the present disclosure, the goal is to generate code instructions which are such that a bot performing only code analysis cannot tell apart the interaction component from the fake components. In particular, the generated code instructions are such that it is possible to interact, via the user interface, with the interaction component and with each fake component.

The code instructions of the interaction component are typically configured to return specific interaction data, referred to as "expected interaction data", in response to detecting an input in the expected interaction zone 32. The code instructions of each fake component are configured to return specific interaction data, referred to as "unexpected interaction data", which is different from the expected interaction data, in response to detecting an input in an unexpected interaction zone 33 in the interaction image 30 which does not overlap the expected interaction zone 32.

Hence, the interaction data returned is not the same for the interaction component and for a fake component. This enables the server to distinguish an input in the expected interaction zone 32 from an input in an unexpected interaction zone 33. Also, different fake components return different unexpected interaction data. Indeed, if the fake components returned the same (unexpected) interaction data, this could be analyzed by a bot as suggesting that the only component returning (expected) interaction data that is different from the (unexpected) interaction data returned by the other (fake) components corresponds to the interaction component.

For example, the interaction data of the interaction and fake components are arbitrarily set such that it is not possible, by analyzing the interaction data returned by the different components of the webpage, to detect that the interaction data returned by one of the components corresponds to the interaction data expected by the server 10. In other words, a bot performing code analysis can detect neither the "expected" character of the expected interaction data nor the "unexpected" character of unexpected interaction data. The server 10, when generating the code instructions for the interaction component and the fake components, may for example store a table listing all possible interaction data returned by each component and, for each possible returned interaction data listed in the table, an indication of whether it corresponds to the expected interaction data (returned by the interaction component) or to unexpected interaction data (returned by a fake component). Hence, the expected interaction data can be seen as an (arbitrary) component identifier of the interaction component, and the unexpected interaction data of a fake component can be seen as an (arbitrary) component identifier of said fake component.

In some examples, the expected interaction data and the unexpected interaction data may be selected randomly by the server 10. For example, the server 10 may generate randomly (N_{FC}+1) codes, with one random code used as expected interaction data and the other N_{FC} random codes used as unexpected interaction data. According to another example, the expected interaction data may correspond to an integer K selected randomly in the interval [0, N_{FC}], and the unexpected interaction data allocated to the fake components correspond to the remaining integers in the interval [0, N_{FC}] (K excluded).

In preferred embodiments, the expected interaction data and the unexpected interaction data are modified each time the webpage is refreshed, to prevent a bot from learning from previous interactions with the webpage.

Also, the expected interaction zone 32 (of the interaction component) is different from the unexpected interaction zones 33 (of the fake components). In particular, there is no overlap between the expected interaction zone 32 and the unexpected interaction zones 33 (i.e. no unexpected interaction zone 33 overlaps the expected interaction zone 32). In preferred embodiments, there is also no overlap between unexpected interaction zones 33, i.e. no unexpected interaction zone 33 overlaps another unexpected interaction zone 33.

The expected interaction zone 32 is represented by a dashed line in figure 3. Figure 3 also represents the unexpected interaction zones 33 with a dashed line. In preferred embodiments, the expected interaction zone 32 and the unexpected interaction zones 33 are not visible by a (human) user, and are for example masked by the interaction image 30 which covers the expected interaction zone 32 and the unexpected interaction zones 33 and/or the properties (e.g. in terms of transparency) of the interaction and fake components are such that they are not visible by a (human) user. In other examples, the expected interaction zone 32 and the unexpected interaction zones 33 may be visible by a (human) user, as long as the interaction portion 31 (which matches the expected interaction zone 32) can be detected by the (human) user to enable said user to tell apart the expected interaction zone 32 from the unexpected interaction zones 33.

In the non-limitative example illustrated by figure 3, the expected interaction zone 32 and the unexpected interaction zones 33 have identical shapes and dimensions. In this non-limitative example, the expected interaction zone 32 and the unexpected interaction zones 33 are rectangular, and their position is for example defined by the coordinates in the interaction image 30 of the top-left corner of the rectangle. More generally, in other examples, it is also possible for the expected interaction zone 32 and the unexpected interaction zones 33 to have different shapes and/or dimensions (as long as the nonoverlapping condition is satisfied).

Also, in the non-limitative example illustrated by figure 3, the positions of the expected interaction zone 32 and the unexpected interaction zones 33 (e.g. coordinates of the top-left corners of the rectangle) are distributed arbitrarily within the interaction image 30. However, in other examples, it is also possible to consider a specific set of regularly-spaced possible positions within the interaction image 30, for the expected interaction zone 32 and the unexpected interaction zones 33.

In some embodiments, the positions within the interaction image 30 of the expected interaction zone 32 (which matches the interaction portion 31 of the interaction image 30) and the unexpected interaction zones 33 may be selected randomly (in the whole interaction image 30, or in the specific set of regularly-spaced possible positions, etc.). In preferred embodiments, the positions of the expected interaction zone 32 and of the unexpected interaction zones 33 may be modified each time the webpage is refreshed, to prevent a bot from learning from previous interactions with the webpage.

As discussed above, the expected interaction zone 32 matches the interaction portion 31 of the interaction image 30, and selecting the position of the expected interaction zone 32 results in selecting also the position of the interaction portion 31 (and vice versa). The position of the expected interaction zone 32 within the interaction image 30 may be selected during step S21, or it may be selected during a different step (e.g. step S20) and received as an input by step S21, as long the expected interaction zone 32 matches the interaction portion 31 of the interaction image 30.

As discussed above, the code instructions of the interaction and fake components are such that a bot performing only code analysis cannot tell apart the interaction component from the fake component(s), and it is the interaction portion 31 of the interaction image 30 that enables a (human) user to detect the expected interaction zone 32 of the interaction component. In particular, the code instructions are such that it is possible to interact, via the user interface, with the interaction component and with the fake components.

It should be noted that the properties of the interaction and fake components, other than the (expected or unexpected) interaction data and the (expected or unexpected) interaction zone, are not necessarily all identical, as long as they cannot be used by a bot to identify the interaction component. For example, a property defined by the code instructions should not have the same value for all fake components and a different value for the interaction component, since this could be used by a bot to detect the interaction component (except e.g. if, for at least one other property, a same value is used for the interaction component and (N_{FC}-1) fake components, and a different value is used for the remaining fake component, etc.).

In preferred embodiments, the code instructions of the fake components are substantially identical to the code instructions of the interaction component. Hence, the interaction component and the fake components have substantially the same properties, e.g. same CSS (cascading style sheets) style, same layer, etc. The code instructions differ only by the interaction data returned and by the interaction zone in which an input is detected. For example, the generation of the code instructions may use reference code instructions, which may be retrieved from a memory 12 of the server 10, which are then modified to configure the code instructions to return specific interaction data when an input is detected in a specific interaction zone. Table 1 provides a non-limitative example of HTML code instructions for interaction and fake components which correspond to buttons.

**Table1**

| | **Interaction component** | | **Fake component** | |
|---|---|---|---|---|
| **Code instructions** | <button class="button" style=" | | <button class="button" style=" | |
| | | Position: absolute; | | Position: absolute; |
| | | left: calc(50% + -239px); | | left: calc(50% + 62px); |
| | | right: calc(50% + -86px); | | right: calc(50% + -88px); |
| | | width: 152px; | | width: 152px; |
| | | height: 45px; | | height: 45px; |
| | | background: transparent; | | background: transparent; |
| | | border: none; | | border: none; |
| | | cursor: pointer; | | cursor: pointer; |
| | | " onclick="handleClick(2)"> | | " onclick="handleClick(4)"> |
| | </button> | | </button> | |

In the example illustrated by table 1, the expected interaction zone 32 and the unexpected interaction zone 33 have the same shape (rectangular) and dimensions (same width and same height), such that the code instructions set different positions for the top-left corner of the expected interaction zone 32 and the unexpected interaction zone 33, respectively. Also, the interaction component and the fake component are configured to call a function handleClick in response to detecting an input (click) in the expected interaction zone 32 and the unexpected interaction zone 33, respectively. However, the function handleClick is called with different component identifiers:
- the function handleClick is called with a component identifier '2' in the case of the interaction component, which corresponds to the expected interaction data,
- the function handleClick is called with a component identifier '4' in the case of the fake component, which corresponds to the unexpected interaction data.

As illustrated by figure 2, the method 20 comprises also a step S23 of generating the webpage comprising the interaction image, the code instructions of the interaction component and the code instructions of each fake component. The step S23 of generating the webpage basically assembles the interaction image and the code instructions such that the generated webpage, when displayed by the remote terminal, positions the expected interaction zone 32 and the unexpected interaction zones 33 in the area occupied by the interaction image 30, and in particular positions the expected interaction zone 32 in the area occupied by the interaction portion 31 of the interaction image 30.

It should be noted that, in some cases, the webpage generated may also comprise other elements, such as forms (for e.g. entering user data which is transmitted to the server 10 when the user clicks on the interaction component), other images, links, tables, etc., which are out of scope of the present disclosure.

Once generated by the server 10, the webpage may be transmitted to a remote (client) terminal, where it may be presented to a user by e.g. a web browser of the terminal.

For the reasons discussed above, the webpage generated is more robust against bot attacks relying on code analysis, because the presence of fake components, which cannot be distinguished from the interaction component based solely on code analysis, decreases the probability that a bot successfully interacts with the interaction component.

However, more evolved bots may also perform image analysis (by e.g. taking a screenshot at the terminal or by processing directly the interaction image 30) in order to detect the interaction portion 31 of the interaction image 30, in which case the bot may also be capable of identifying the interaction component that has an interaction zone which is collocated with the detected interaction portion 31.

In order to improve the robustness against bot attacks which rely on both code analysis and image analysis, it is proposed in some embodiments to generate an interaction image 30 that makes the automatic detection of the interaction portion 31 more difficult.

For example, in some embodiments, the generation of the interaction image 30 may comprise generating an original image as discussed above in relation with step S20, and adding noise to the original image to obtain the interaction image 30. For example, the added noise may correspond to Gaussian noise or to colored noise. The noise level is chosen such that a (human) user can still detect the interaction portion 31 of the interaction image 30 despite the presence of the noise. However, adding noise in the interaction image 30 may strongly decrease the probability that a bot detects the interaction portion 31 when processing the webpage by using image processing algorithms.

Alternatively, or in combination thereof, the generation of the interaction image 30 may comprise generating an original image as discussed above in relation with step S20, and applying an adversarial machine learning attack technique on the original image to obtain the interaction image 30. Indeed, the bot may rely on a machine learning model to process the interaction image 30 (or a screenshot of the webpage). In such a case, the interaction image 30 may correspond to an adversarial example, i.e. an image designed to fool the machine learning model used by the bot into making wrong predictions. For example, the server 10 may use the Fast Gradient Sign Method (FGSM) technique to generate the interaction image 30. However, step S20 may use any adversarial example generation technique known to the skilled person, and the choice of a specific technique corresponds to a specific but non-limitative embodiment of the present disclosure.

Figure 4 represents a diagram showing the main steps of a method 40 for detecting, by the server 10, bot interaction with a webpage at a terminal.

As illustrated by figure 4, the method 40 for detecting bot interaction comprises a step S40 of generating a webpage by using the method 20 discussed above, and a step S41 of transmitting the webpage to the terminal.

The method 40 for detecting bot interaction comprises also a step S42 of receiving interaction data (possibly with other data), transmitted by the terminal in response to detecting an input, submitted via the interaction component or via a fake component. During step S42, the server 10 evaluates the received interaction data to determine whether it corresponds to expected interaction data or to unexpected interaction data. As indicated above, this evaluation may use e.g. a table (established during step S40) listing all possible interaction data returned by each component of the webpage and, for each possible returned interaction data listed in the table, an indication of whether it corresponds to expected interaction data (returned by the interaction component) or to unexpected interaction data (returned by a fake component).

If the received interaction data corresponds to expected interaction data (reference S42a), then no bot interaction is detected (step S43). For example, the server 10 may further perform the action(s) planned in case of a legitimate interaction at the webpage (e.g. process the received data, etc.).

In turn, if the received interaction data corresponds to unexpected interaction data (reference S42b), then a possible bot interaction is detected (step S44). For example, the server 10 may further perform the actions planned in case of a possible malicious interaction at the webpage (e.g. refreshing the webpage to check if further unexpected interaction data is received, raising an alert, etc.).

It is emphasized that the present disclosure is not limited to the above exemplary embodiments. Variants of the above exemplary embodiments are also within the scope of the present disclosure.

## Claims

1. A method (20) for generating, by a server (10), a webpage to be displayed at a terminal, wherein the webpage comprises an interaction component for detecting an input from a user via a user interface of the terminal, wherein the method comprises:
- (S20) obtaining an interaction image (30), wherein the interaction image comprises an interaction portion (31) which is detectable by the user,
- (S21) generating code instructions for the interaction component, which code instructions are configured to return specific interaction data, referred to as "expected interaction data", in response to detecting an input via the user interface in an expected interaction zone (32) which corresponds to the interaction portion of the interaction image,
- (S22) generating code instructions for at least one fake component, wherein the code instructions of each fake component are configured to return specific interaction data, referred to as "unexpected interaction data", which is different from the expected interaction data, in response to detecting an input via the user interface in an unexpected interaction zone (33) in the interaction image which does not overlap the expected interaction zone, and
- (S23) generating a webpage comprising the interaction image, the code instructions of the interaction component and the code instructions of each fake component.

2. The method (20) according to claim 1, comprising generating code instructions for a plurality of fake components, wherein the code instructions of the interaction component and the code instructions of the plurality of fake components are configured such that a property defined by the code instructions cannot have a same value for the plurality of fake components and a different value for the interaction component.

3. The method (20) according to any one of the preceding claims, wherein the code instructions of each fake component are identical to the code instructions of the interaction component except for the unexpected interaction data, which is different from the expected interaction data, and the unexpected interaction zone, which does not overlap the expected interaction zone.

4. The method (20) according to any one of the preceding claims, comprising selecting randomly the position of the interaction portion in the interaction image.

5. The method (20) according to any one of the preceding claims, wherein the expected interaction data of the interaction component and the unexpected interaction data of each fake component are arbitrary data.

6. The method (20) according to claim 5, wherein the expected interaction data of the interaction component and the unexpected interaction data of each fake component are selected randomly.

7. The method (20) according to any one of the preceding claims, comprising modifying the interaction portion from one webpage generation to another webpage generation and/or modifying the expected interaction zone and each unexpected interaction zone from one webpage generation to another webpage generation and/or modifying the expected interaction data and each unexpected interaction data from one webpage generation to another webpage generation.

8. The method (20) according to any one of the preceding claims, wherein the obtaining of the interaction image comprises obtaining an original image and adding noise to the original image to obtain the interaction image.

9. The method (20) according to any one of the preceding claims, wherein the obtaining of the interaction image comprises obtaining an original image and applying an adversarial machine learning attack technique on the original image to obtain the interaction image.

10. The method (20) according to any one of the preceding claims, wherein the interaction component and each fake component correspond to clickable components.

11. The method (20) according to any one of the preceding claims, wherein the interaction component and each fake component correspond to HTML <button> elements or to clickable HTML <div> elements.

12. A method (40) for detecting, by a server, bot interaction with a webpage at a terminal, comprising:
- (S40) generating a webpage according to any one of the preceding claims,
- (S41) transmitting the webpage to the terminal,
- (S42) receiving interaction data from the terminal,
- in response to the received interaction data comprising unexpected interaction data: (S44) detecting a possible bot interaction.

13. A computer program product comprising instructions which, when executed by at least one processor, configure said at least one processor to carry out a method (20, 40) according to any one of the preceding claims.

14. A non-transitory computer-readable storage medium comprising instructions which, when executed by at least one processor, configure said at least one processor to carry out a method (20, 40) according to any one of claims 1 to 12.

15. A server (10) comprising at least one processor and at least one memory, configured to carry out a method (20, 40) according to any one of claims 1 to 12.
